# EUROPÄISCHE PATENTSCHRIFT

(11) **EP 0 513 297 B1**
(45) Veröffentlichungstag und Bekanntmachung des Hinweises auf die Patenterteilung: **05.03.1997**
(21) Anmeldenummer: 92900181.6
(22) Anmeldetag: 05.12.1991
(51) Int. Cl.: H04N 7/32, H04N 7/48

(54) **VERFAHREN ZUR CODIERUNG UND DECODIERUNG DER VIDEODATEN EINER BILDFOLGE**
PROCESS FOR CODING AND DECODING VIDEO DATA OF A FRAME SEQUENCE
PROCEDE DE CODAGE ET DE DECODAGE DES DONNEES VIDEO D'UNE SEQUENCE D'IMAGES

(30) Priorität: 05.12.1990 DE 9012331 U
(43) Veröffentlichungstag der Anmeldung: 19.11.1992
(73) Patentinhaber: Deutsche ITT Industries GmbH, 79108 Freiburg (DE)
(72) Erfinder: BUTERA, Bill, D-7830 Emmendingen (DE)
(86) Internationale Anmeldenummer: EP9102320
(87) Internationale Veröffentlichungsnummer: WO9210909

(56) Entgegenhaltungen:
- EP-A- 0 379 217
- EP-A- 0 396 360
- DE-A- 3 820 038

## Beschreibung

Die Erfindung betrifft ein Verfahren zur Codierung und Decodierung der Videodaten einer Bildfolge, vgl. die oberbegriffe der Ansprüche 1 und 2. Bei derartigen Verfahren werden in der Regel alle Bilder rasterförmig abgetastet und anschließend werden die so erhaltenen Videosignale digitalisiert. Im einfachsten Fall wird die Bildfolge dadurch übertragen, daß die digitalisierten Videosignale nacheinander übertragen werden. Diese Art der Codierung erfordert je nach Auflösung und Bildfolgefrequenz einen sehr leistungsfähigen Datenübertragungskanal. Ähnlich verhält es sich, wenn die Daten derartiger Bildfolgen zu speichern sind, wobei eine entsprechende Speicherkapazität dem Datenstrom zur Verfügung gestellt werden muß.

Es sind Codierungsverfahren bekannt, bei denen die Redundanz in den Videodaten ausgenutzt wird, um den Datenstrom in seinem Umfang zu reduzieren. Bei Einzelbildern und Bilderfolgen nützt man dabei aus, daß der Bildinhalt neben feinen Details in der Regel großflächige Strukturen enthält und innerhalb dieser Strukturen eine feinere Auflösung nicht erforderlich ist. Nachbarbildpunkte in horizontaler, vertikaler oder beliebiger Richtung unterscheiden sich bei großflächigen Strukturen nur an deren Randbereichen. Noch größer ist die Ähnlichkeit, wenn zwei unmittelbar aufeinanderfolgende Einzelbilder einer zusammengehörigen Bildfolge miteinander verglichen werden. Einige bekannte Codierungsverfahren nützen diese Ähnlichkeiten aus, z.B. bei der Differenzpulscodemodulation (= DPCM).

Eine weitere Möglichkeit zur Datenreduktion bei der Codierung ergibt sich, wenn neben den reinen Videodaten einer Bildfolge auch eine evtl. vorhandene Bewegung innerhalb der Bildfolge berücksichtigt wird. Dies ermöglicht eine Abschätzung, in welche Richtung sich die jeweiligen Bildpunkte voraussichtlich bewegen werden. Aus dieser mitübertragenen Bewegungsinformation lassen sich auf der Empfängerseite bessere Schätzwerte für die zu rekonstruierenden Einzelbilder ermitteln. Die hierzu bekannten Codierungsverfahren liefern je nach dem verwendeten Verfahren und Aufwand mehr oder weniger genaue rekonstruierte Bildfolgen. Derartige Verfahren, einschließlich der Bewegungserkennung, sind beispielsweise ausführlich in Jae S.Lim, "Two-Dimensional Signal and Image Processing", Prentice-Hall International, Inc., 1990, insbesondere Kapitel 9.6.2 "Motion-Compensated Image Restoration", Seite 570 - 575 beschrieben.

In der europäischen Patentschrift EP-B-0 154 125 ist ein Verfahren zur bewegungsadaptiven Interpolation von Fernsehbildsequenzen mit einer zugehörigen Anordnung und Anwendung beschrieben. Dabei werden von einer Bildsequenz bei der Übertragung einzelne Teile dieser Sequenz ausgelassen. Mittels Bewegungsabschätzeinrichtungen wird bestimmt, welche Bildanteile stationär oder bewegt sind und welche stationären Hintergrundanteile durch die bewegten Bildanteile verdeckt oder sichtbar werden.

In EP-A-0 379 217 ist ein Codierungsverfahren für Fernsehsignale beschrieben, das anstatt aller Vollbilder nur eine Auswahl von Vollbildern überträgt, wobei über Bewegungierkennungsschaltungen aus den übersprungenen Zwischenbildern Differenzbild-Datenfelder gebildet werden, die zur Übertragung nur einen geringeren Datenumfang erfordern, vgl. den Oberbegriff des Anspruchs 1. Auf der Empfängerseite ist eine entsprechend arbeitende Dekodierschaltung vorgesehen.

Da die Bewegungsabschätzung für Videosignale über aufwendige Algorithmen erfolgt, die in Echtzeit durchgeführt werden müssen, ist eine Bewegungsabschätzung für hochauflösende Fernsehsignale gemäß oben beschriebenem Stand der Technik bisher nur auf der Senderseite in Betracht gezogen worden. Die Bewegungsinformation wird vom Sender in dem einen bekannten Fall dabei als codierter Bewegungsvektor übertragen. Im Empfänger wird aus dieser Bewegungsinformation mittels einfachen adaptiven Filterschaltungen wieder die vollständige Bildsequenz für das hochauflösende Fernsehbild rekonstruiert.

Die Fortschritte bei der Schaltungsintegration infolge der Digitalisierung ermöglichen es, daß auch bei Konsumgeräten aufwendige Signalverarbeitungsverfahren verwendet werden können, die bisher nur auf der Studio- oder Senderseite möglich waren. So ist beispielsweise eine weitere Reduktion der zu übertragenden Videodaten möglich, wenn die relativ umfangreiche Bewegungsinformation zur Bildung der Bewegungsabschätzung auf der Empfängerseite nicht mitübertragen werden muß, wie dies beim Stand der Technik gemäß der EP-A-0 379 217 der Fall ist.

Aufgabe der in den Ansprüchen gekennzeichneten Erfindung ist es, ein Verfahren zur Codierung und Decodierung von Videodaten einer Bildfolge anzugeben, das bei hoher Wiedergabetreue ebenfalls ohne die Übertragung einer selbständigen Bewegungsinformation auskommt.

Diese Aüfgabe wird durch die in den Ansprüchen gekennzeichnete Erfindung gelöst.

Die Erfindung und ihre Vorteile werden nun anhand der Figuren der Zeichnung näher erläutert:
Fig. 1 zeigt schematisch als Blockschaltbild ein Ausführungsbeispiel für eine Codierungseinrichtung auf der Senderseite und
Fig. 2 zeigt schematisch als Blockschaltbild die zugehörige Decodierungseinrichtung auf der Empfängerseite.

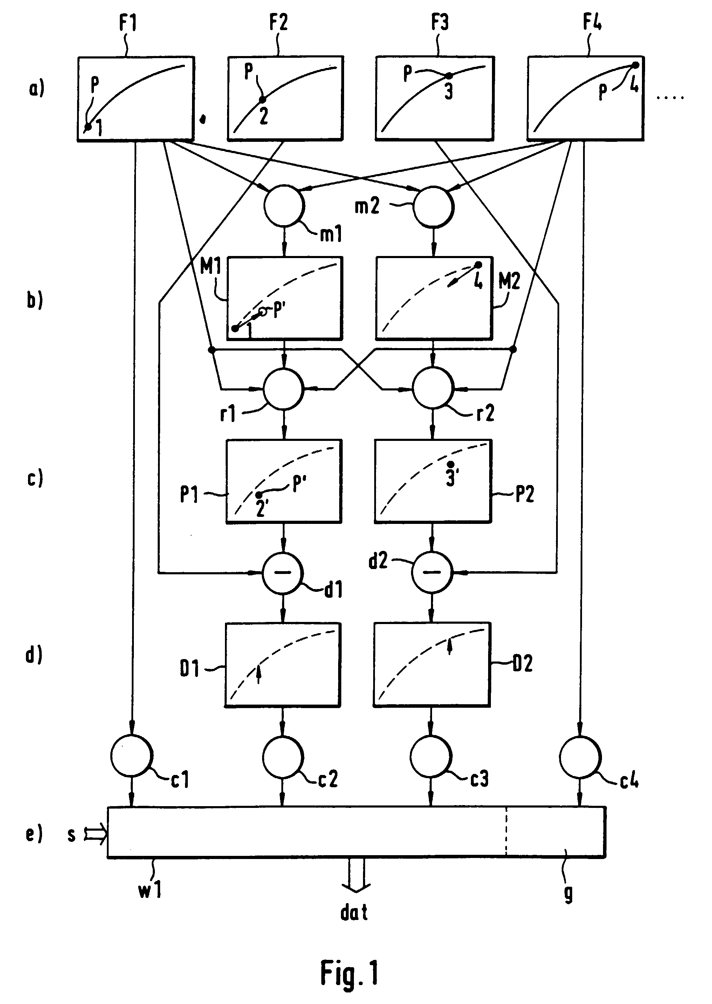

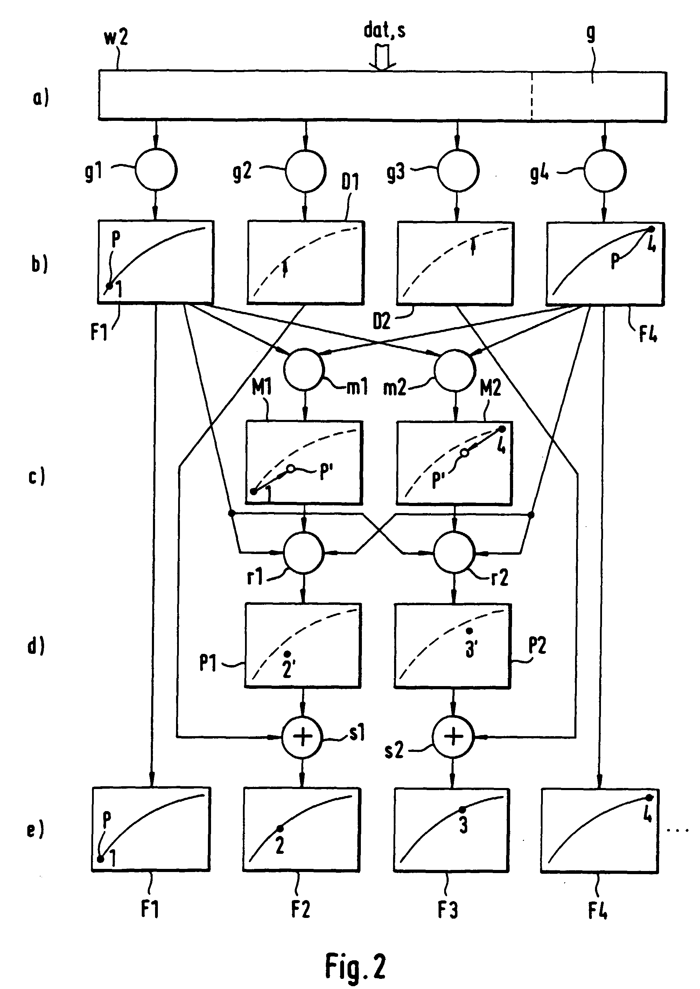

Der Grundgedanke der Erfindung besteht darin, die Codierung der zu übertragenden Bildfolge von Einzelbild zu Einzelbild nicht nach dem gleichen Verfahren vorzunehmen, sondern die Codierung auf eine Gruppe von Einzelbildern zu erstrecken. Wird nämlich jedes n-te Bild möglichst vollständig als Hauptbild (= key-frame) übertragen, wobei n größer/gleich 2 ist, dann kann über eine identische Bewegungsabschätzung auf der Sender- und auf der Empfängerseite mit Hilfe von n-1 Bewegungsabschätzern eine identische Bewegungsinformation in Form von n-1 Bewegungsfeldern, die den ausgelassenen n-1 Zwischenbildern entsprechen, ermittelt werden. Mit dieser Bewegungsinformation lassen sich die ursprünglichen Zwischenbilder je nach Aufwand weitgehend fehlerfrei rekonstruieren, vgl. Fig 1, Zeile b und Fig. 2, Zeile c.

Auf der Sender- und Empfängerseite lassen sich mittels dieser Bewegungsinformation über eine lineare Interpolation unter Berücksichtigung der bewegten Bildbereiche identische Phantombilder für die Zwischenzeiten ermitteln, vgl. Fig. 1, Zeile c und Fig. 2, Zeile d. Auf der Senderseite muß nun ein Differenzbild aus dem ausgelassenen Zwischenbild und dem zugehörigen Phantombild gebildet werden, vgl. Fig. 1, Zeile d. Der Informationsinhalt dieses oder dieser Differenzbilder ist wegen der großen Ähnlichkeit zu dem zugehörigen Zwischenbild sehr gering - bei einer geeigneten Codierung wird damit auch der Datenumfang gering. Der zu übertragende Datenstrom dat, vgl. Fig. 1, Zeile e, ist daher gegenüber dem ursprünglichen Datenstrom der Bildfolge deutlich reduziert. Ein sehr effektives Verfahren zur Codierung und Datenreduktion ist beispielsweise in der genannten Veröffentlichung von Jae S. Lim im Kapitel 10.3.4, Seite 630 - 632 angegeben. Es ist das "subband signal coding - Verfahren", das zur Codierung die Ausgangsdaten digitaler Filterbänke heranzieht.

Auf der Empfängerseite wird über ähnliche Zwischenschritte aus den empfangenen Differenzbildern und den möglichst vollständig übertragenen Hauptbildern wieder die ursprüngliche Bildfolge rekonstruiert, vgl. Fig. 2, Zeile e.

Die einzelnen Funktionseinheiten oder Signalverarbeitungsstufen an sich sind nicht Gegenstand der Erfindung. Sie sind entweder bekannt oder verwenden bekannte Algorithmen. Dies trifft auch auf die Bewegungsabschätzer zu, mit deren Hilfe die Bewegungsfelder ermittelt werden.

In Fig. 1, Zeile a sind schematisch aus einer laufenden Bildfolge vier aufeinanderfolgende Vollbilder dargestellt, denen jeweils ein erstes bzw. zweites bzw. drittes bzw. viertes Vollbild-Datenfeld F1, F2, F3, F4, entspricht. Die schematische Darstellung zeigt zur Verdeutlichung einer Bewegung in jedem Einzelbild einen Kreisbogen mit der Momentdarstellung eines sich gleichförmig bewegenden Bildpunktes P. Den vier Einzelbildern entspricht dabei die Bildpunktposition 1, 2, 3 oder 4.

Im Ausführungsbeispiel nach Fig. 1 ist angenommen, daß n = 3 ist. Aus dem ersten und vierten Vollbild-Datenfeld F1, F4 ist mittels eines ersten Bewegungsabschätzers ml ein erstes Bewegungsfeld M1 gebildet. Der Zeitpunkt dieses Bewegungsfeldes ist auf den Bezugszeitpunkt des ersten Zwischenbild-Datenfeldes F2 bezogen. Auf gleiche Weise wird für den Bezugszeitpunkt des zweiten Zwischenbild-Datenfeldes F3 mittels eines zweiten Bewegungsabschätzers m2 ein zweites Bewegungsfeld M2 berechnet, vgl. Zeile b. In den beiden Bewegungsfeldern M1, M2 ist schematisch ein Bewegungsvektor eingezeichnet, dessen Spitze auf den linear interpolierten Ort P' des bewegten Bildpunktes zeigt. Eigentlich müßte der Bewegungspfeil in beiden Bewegungsfeldern M1, M2 sowohl von der Bildpunktposition 1 als auch von der Bildpunktposition 4 ausgehen, wobei die jeweilige Gewichtung aber unterschiedlich ist. In Fig. 1 und Fig. 2 sind in den Bewegungsfeldern M1, M2 daher lediglich die Hauptvektoren dargestellt.

Aus dem ersten bzw. zweiten Hauptbild-Datenfeld F1, F4 wird unter Berücksichtigung des jeweiligen Bewegungsfeldes M1, M2 mittels einer ersten bzw. einer zweiten Phantombildrecheneinrichtung r1, r2 über eine lineare Interpolation ein erstes bzw. ein zweites Phantombild-Datenfeld P1, P2 berechnet. Dabei wird jede PhantombildRecheneinrichtung mit den Daten des ersten und zweiten Hauptbild-Datenfeldes F1, F4 und den Daten des jeweiligen Bewegungsfeldes M1, M2 gespeist.

Mittels einer ersten bzw. einer zweiten Differenzbildungseinrichtung d1, d2 wird aus dem ersten bzw. zweiten Zwischenbild-Datenfeld F2, F3 und dem ersten bzw. zweiten Phantombild-Datenfeld P1, P2 ein erstes bzw. zweites Differenzbild-Datenfeld D1, D2 berechnet. Die beiden kleinen Pfeile in den Differenzbild-Datenfeldern D1, D2 zeigen schematisch die örtliche Differenz zwischen dem linear interpolierten (P') und dem wahren Bildpunkt P beim Vergleich des zugehörigen Zwischenbild-Datenfeldes F2, F3 mit dem zugehörigen Phantombild-Datenfeld P1, P2. Die gesamte restliche Bildfläche enthält darüber hinaus keine weitere Bildinformation. Der Datenumfang der Differenzbild-Datenfelder D1, D2 ist somit bei einer geeigneten Codierung äußerst gering, weil nur ein ganz kleiner Bereich eine Bildinformation enthält, nämlich die Abweichung von der linearen Interpolation. Bei höherem Aufwand kann selbstverständlich auch eine nichtlineare Interpolation verwendet werden.

Zur Übertragung werden die ausgewählten Bilddaten der Zeilen a und d mittels einer Senderschaltweiche wl einzeln abgerufen und in den zu übertragenden Datenstrom dat umgesetzt, vgl. Zeile e. Durch den Abschnitt g der Senderschaltweiche soll dargestellt werden, daß das zweite Hauptbild-Datenfeld F4 eigentlich einem neuen Bildfolgeabschnitt zuzurechnen ist und dort an die Stelle des ersten Hauptbild-Datenfeldes F1 rücken würde. In gleicher Weise ist der Abschnitt g der Empfängerschaltweiche w2 in Fig. 2 zu verstehen. Vor der Zusammenführung der einzelnen Datenfelder in der Senderschaltweiche wl können diese mittels eines ersten bzw. zweiten bzw. dritten bzw. vierten Hilfscodierers c1, c2, c3, c4 mit üblichen Komprimierungsverfahren in ihrem Datenumfang reduziert werden. In der Senderschaltweiche w1 werden dem Datenstrom dat noch Synchronisierzeichen s oder Synchronisierdaten zugeführt, die zur Trennung und Kennzeichnung der einzelnen Datenfelder dienen.

Fig. 2 zeigt schematisch das zu Fig. 1 gehörige Decodierungsverfahren auf der Empfängerseite. Da die meisten Funktionseinheiten bereits aus Fig. 1 bekannt sind, werden für identische Funktionsheiten gleiche Bezugszeichen verwendet. Zur Decodierung wird der empfangene Datenstrom dat zunächst einer in Zeile a dargestellen Empfängerschaltweiche w2 zugeführt, die den Datenstrom dat entsprechend der darin enthaltenen Synchronisierzeichens auf vier Speichereinrichtungen aufteilt. Über Hilfsdecodierer g1, g2, g3, g4 können die in den Hilfscodierern gegebenenfalls reduzierten Daten wieder in ihre ursprüngliche Form gebracht werden. In der Regel ist jeder Bildpunkt der gespeicherten Datenfelder für sich codiert, entweder als Kombinationssignal über seine Quadraturkomponenten u, v oder als getrennte Komponentensignale für die einzelnen Farbkathoden.

In Zeile b ist schematisch dargestellt, daß in der Speichereinrichtung die Datenfelder des ersten und zweiten Hauptbildes F1, F4 und des ersten und zweiten Differenzbildes D1, D2 abgelegt sind. Wie in Fig. 1 wird über einen ersten bzw. zweiten Bewegungsabschätzer m1, m2 ein erstes bzw. zweites Bewegungsfeld M1, M2 ermittelt. Aus jeweils einem Bewegungsfeld M1, M2 und den beiden Hauptbild-Datenfeldern F1, F4 wird mittels einer ersten bzw. zweiten Phantombildrecheneinrichtung r1, r2 ein erstes bzw. zweites Phantombild-Datenfeld P1, P2 errechnet, das einem linear interpolierten Zwischenbild entspricht. Die Berechnung und das jeweilige Interpolationsprinzip soll dabei möglichst dem verwendeten Verfahren auf der Senderseite gleich sein, sonst ergeben sich Bildabweichungen.

Im Unterschied zu Fig. 1 wird nun aus dem gespeicherten ersten Differenzbild-Datenfeld D1 und dem ersten Phantombild-Datenfeld P1 mittels einer ersten Summiereinrichtung s1 ein Summenbild-Datenfeld F2 errechnet. Dies ist die gewünschte Rekonstruktion des ersten Zwischenbild-Datenfeldes F2. In analoger Weise wird bei der Errechnung des zweiten Zwischenbild-Datenfeldes F3 verfahren.

In Zeile e ist die rekonstruierte Folge der Vollbild-Datenfelder F1, F2, F3, F4, schematisch dargestellt, die damit der weiteren Signalverarbeitung zur Verfügung steht.

Das in Fig. 2 dargestellte Decodierungsverfahren mit n = 3 rekonstruiert für jeden Abschnitt zwei nebeneinanderliegende Zwischenbilder F2, F3. Die Höchstanzahl n(max)-1 der zu rekonstruierenden Zwischenbilder hängt von der Bewegung und der geforderten Auflösung ab. Bei geringem Bewegungsinhalt kann die Anzahl der Zwischenbilder wesentlich vergrößert werden.

Für das beschriebene Codierungs- und Decodierungsverfahren ist es selbstverständlich unerheblich, ob die Realisierung in Hardware- und/oder in Software-Technik erfolgt. Die zunehmende Leistungsfähigkeit von Videoprozessoren ermöglicht es, daß auch im Echtzeitbetrieb immer mehr Funktionseinheiten in Form von Programmen mit unspezifischen Datenverarbeitungseinrichtungen abgewickelt werden können. Dies ist insbesondere im Konsumbereich von Interesse, da derartige universelle Mikroprozessoren über eine Programmodifikation rasch an unterschiedliche Aufgaben angepaßt werden können.

## Patentansprüche

1. Verfahren zur Codierung der Videodaten einer Bildfolge, deren Einzelbilder in einem festen zeitlichen Abstand aufeinander folgen, wobei jedem Einzelbild ein Vollbild-Datenfeld zugeordnet ist und das Verfahren durch folgende Verfahrensschritte definiert ist:
- die Folge der Vollbild-Datenfelder (F1, F2, F3, F4, ...) wird in jeweils n Vollbild-Datenfelder umfassende Abschnitte unterteilt, wobei in jedem Abschnitt das erste Vollbild-Datenfeld als Hauptbild-Datenfeld (F1) (= key frame) und die restlichen n-1 Vollbild-Datenfelder als Zwischenbild-Datenfelder (F2, F3) dienen, dabei ist n größer/gleich 2,
- aus dem ersten Hauptbild-Datenfeld (F1) und dem nächst nachfolgenden zweiten Hauptbild-Datenfeld (F4) werden mittels Bewegungsabschätzung Bewegungsfelder (M1, M2) ermittelt, wobei deren jeweiliger Bezugszeitpunkt dem Bezugszeitpunkt des zugehörigen Datenfeldes (F2, F3) gleich ist,
- aus dem zugehörigen Vollbild-Datenfeld (F1, F2, F3) wird mit Hilfe des betreffenden Bewegungsfeldes (M1, M2) mittels einer Differenzbildungseinrichtung (d1, d2) ein Differenzbild-Datenfeld (D1, D2) berechnet, wobei
- das Ausgangssignal des Codierungsverfahrens ein Datenstrom (dat) ist, der aus den Daten der Hauptbild-Datenfelder (F1, F4) und den Daten der Differenzbild-Datenfelder (D1, D2) gebildet wird,
gekennzeichnet durch folgende weitere Merkmale:
- die Bewegungsschätzung aus dem ersten Hauptbild-Datenfeld (F1) und dem nächst nachfolgenden zweiten Hauptbild-Datenfeld (F4) erfolgt mittels n-1 Bewegungsabschätzern (m1, m2), mit denen aus den vorgegebenen Bildpunktbewegungen n-1 Bewegungsfelder (M1, M2) ermittelt werden, wobei deren jeweiliger Bezugszeitpunkt dem Bezugszeitpunkt des zugehörigen Zwischenbild-Datenfeldes (F2, F3) gleich ist,
- aus dem ersten und zweiten Hauptbild-Datenfeld (F1, F4) und jeweils einem zugehörigen Bewegungsfeld (M1, M2) wird mittels einer Phantombildrecheneinrichtung (r1, r2), die eine lineare Interpolation durchführt, als Zwischenschritt gegenüber dem bekannten Verfahren zwischen der Bewegungsschätzung und der Berechnung der Differenzbild-Datenfelder ein Phantombild-Datenfeld (P1, P2) berechnet,
- die Differenzbildungseinrichtung (d1, d2) berechnet dann das Differenzbild-Datenfeld (D1, D2) aus dem Phantombild-Datenfeld (P1, P2) und dem zugehörigen Zwischenbild-Datenfeld (F2, F3), und
- die Einfügung der Daten der Hauptbild-Datenfelder (F1, F4) und der Daten der Differenzbild-Datenfelder (D1, D2) in den Datenstrom (dat) erfolgt mitttels einer Senderschaltweiche (w1), die auch Synchronisierzeichen (s) zur Identifikation und Trennung der einzelnen Datenfelder (F1, D1, D2, F4, ...) einfügt.

2. Verfahren zur Decodierung der in einem Datenstrom enthaltenen Videodaten einer Bildfolge, die nach einem Verfahren gemäß Anspruch 1 codiert sind,
gekennzeichnet durch folgende Merkmale:
- aus einem Datenstrom (dat) mit Synchronisierzeichen (s) werden mittels einer Empfängerschaltweiche (w2) ein erstes und ein dazu nächstfolgendes zweites Hauptbild-Datenfeld (F1, F4) und n-1 Differenzbild-Datenfelder (D1, D2) abgetrennt und jeweils einer Speichereinrichtung zugeführt, dabei ist n größer/gleich 2,
- aus dem ersten und zweiten Hauptbild-Datenfeld (F1, F4) werden mittels n-1 Bewegungsabschätzern (m1, m2) aus den vorgegebenen Bildpunktbewegungen n-1 Bewegungsfelder (M1,M2) ermittelt, wobei deren jeweiliger Bezugszeitpunkt dem Bezugszeitpunkt des zugehörigen Differenzbild-Datenfeldes (D1, D2) gleich ist,
- aus jeweils einem zugehörigen Bewegungsfeld (M1, M2) und dem ersten und zweiten Hauptbild-Datenfeld (F1, F4) wird mittels einer Phantombildrecheneinrichtung (r1, r2), die eine lineare Interpolation durchführt, ein Phantombild-Datenfeld (P1, P2) berechnet,
- aus dem Phantombild-Datenfeld (P1, P2) und dem zugehörigen Differenzbild-Datenfeld (D1, D2) wird mittels einer Summiereinrichtung (s1, s2) ein zugehöriges Zwischenbild-Datenfeld (F2, F3) berechnet, und
- als Ausgangssignale liefert das Decodierverfahren das erste und zweite Hauptbild-Datenfeld (F1, F4) und die dazwischenliegenden n-1 rekonstruierten Zwischenbild-Datenfelder (F2, F3).

## Claims

1. Method of encoding the video data of an image sequence whose individual images follow each other at fixed time intervals and are each assigned a frame data field, said method being defined by the following steps:
- The sequence of frame data fields (F1, F2, F3, F4, ...) is divided into sections each comprising n frame data fields, the first frame data field in each section serving as a key frame data field (F1), and the remaining n-1 frame data fields in each section serving as intermediate-frame data fields (F2, F3), where n is greater than or equal to 2;
- from the first key frame data field (F1) and the next following, second key frame data field (F4), motion fields (M1, M2) are determined by motion estimation, the respective reference times of said motion fields (M1, M2) being equal to the respective reference times of the associated data fields (F2, F3);
- from the associated frame data field (F1, F2, F3) a difference image data field (D1, D2) is computed with the aid of the respective motion field (M1, M2) by means of a subtracter (d1, d2),
- the output signal of the encoding process being a data stream (dat) which is formed from the data of the key frame data fields (F1, F4) and the data of the difference image data fields (D1, D2),
characterized by the following features:
- The motion estimation from the first key frame data field (F1) and the next following, second key frame data field (F4) is performed by means of n-1 motion estimators (ml, m2) which determine n-1 motion fields (M1, M2) from the predetermined picture-element motions, the respective reference times of said n-1 motion fields (M1, M2) being equal to the respective reference times of the associated intermediate-frame data fields (F2, F3);
- in an intermediate step compared to the prior-art method, between the motion estimation and the computation of the difference image data fields, a phantom image data field (P1, P2) is computed from the first and second key frame data fields (F1, F4) and a respective one of the motion fields (M1, M2) by means of a phantom-image-computing device (r1, r2) which performs a linear interpolation;
- the subtracter (d1, d2) then computes the difference image data field (D1, D2) from the phantom image data field (P1, P2) and the associated intermediate-frame data field (F2, F3); and
- the data of the key frame data fields (F1, F4) and the data of the difference image data fields (D1, D2) are inserted into the data stream (dat) by means of a transmitter switching device (w1) which also inserts synchronizing characters (s) for identifying and separating the individual data fields (F1, D1, D2, F4, ...).

2. Method of decoding the video data of an image sequence which are contained in a data stream and are encoded by a method as claimed in claim 1,
characterized by the following features:
- By means of a receiver switching device (w2), a first key frame data field (F1), a next following, second key frame data field (F4), and n-1 difference image data fields (D1, D2) are separated from a data stream (dat) including synchronizing characters (s), and are fed to one memory device each, where n is greater than or equal to 2;
- by means of n-1 motion estimators (m1, m2), n-1 motion fields (M1, M2) are determined from the first and second key frame data fields (F1, F4), the respective reference times of said motion fields (M1, M2) being equal to the respective reference times of the associated difference image data fields (D1, D2);
- from a respective one of the motion fields (M1, M2) and the first and second key frame data fields (F1, F4), a phantom image data field (P1, P2) is computed by means of a phantom-image-computing device (r1, r2);
- from the phantom image data field (P1, P2) and the associated difference image data field (D1, D2), an associated intermediate-frame data field (F2, F3) is computed by means of a summing device (s1, s2); and
- as output signals, the decoding process provides the first and second key frame data fields (F1, F4) and the n-1 reconstructed intermediate-frame data fields (F2, F3).

## Revendications

1. Procédé pour le codage des données vidéo d'une suite d'images, dont les images individuelles se succèdent en étant séparées par un intervalle de temps fixe, une zone de données d'image complète étant associée à chaque image individuelle et le procédé étant défini par les étapes opératoires suivantes :
- la suite des zones de données d' images complètes (F1, F2, F3, F4...) est subdivisée en sections comprenant respectivement n zones de données d'images complètes, auquel cas dans chaque section, la première zone de données d'image complète est utilisée comme zone de données d'image principale (F1) (= key frame) et les n-1 autres zones de données d'images complètes sont utilisées en tant que zones de données d'images intermédiaires (F2, F3), n étant égal/supérieur à 2,
- des zones de déplacement (M1, M2) sont déterminées à partir de la premières zone de données d'image principale (F1) et de la seconde zone de données d'image principale immédiatement suivante (F4), au moyen d'une estimation de déplacement, l'instant respectif de référence de ces zones étant identique à l'instant de référence de la zone de données associée (F2, F3),
- une zone de données d'image différentielle (D1, D2) est calculée, à partir de la zone associée de données d'image complète (F1, F2, F3), à l'aide de la zone concentrée de déplacement (M1, M2), à l'aide d'un dispositif de formation de différence (d1, d2),
- le signal de sortie du procédé de codage étant un flux de données (dat), qui est formé à partir des données des zones de données d'images principales (F1, F4) et des données des zones de données d'image différentielle (D1, D2),
caractérisé par les autres caractéristiques suivantes :
- l'estimation du déplacement à partir de la première zone de données d'image principale (F1) et la seconde zone de données immédiatement suivante d'image principale (F4) s'effectue à l'aide de n-1 estimateurs de déplacement (m1, m2), à l'aide desquels n-1 zones de déplacement (M1, M2) sont déterminées à partir des déplacement prédéterminés des points d'image, l'instant respectif de référence de ces zones étant identique à l'instant de référence de la zone associée de données d'image intermédiaire (F2, F3),
- une zone de données d'image fantôme (P1, P2) est calculée à partir des première et seconde zones de données d'images principales (F1, F4) et à partira respectivement d'une zone associée de déplacement (M1, M2), à l'aide d'un dispositif (r1, r2) de calcul d'images fantômes, qui exécute une interpolation linéaire, en tant qu'étape intermédiaire par rapport au procédé connu, entre l'estimation de déplacement et le calcul des zones de données d'images différentielles,
- le dispositif de formation de différence (d1, d2) calcule alors la zone de données d'image différentielle (D1, D2) à partir de la zone de données d'image fantôme (P1, P2) et de la zone associée de données d'image intermédiaire (F2, F3), et
- l'insertion des données des zones de données d'images principales (F1, F4) et des données des zones de données d'images différentielles (D1, D2) dans le flux de données (dat) s'effectue à l'aide d'un aiguillage de commutation d'émission (w1), qui introduit également des symboles de synchronisation (s) pour l'identification et la séparation des zones individuelles de données (F1, D1, D2, F4,...).

2. Procédé pour le décodage des données vidéo d'une suite d'images, qui sont contenues sous forme codée dans un flux de données et qui sont codées conformément au procédé selon la revendication 1,
caractérisé par les caractéristiques suivantes :
- une première zone de données d'image principale et une seconde zone de données d'image principale (F1, F4), qui succède directement à la première, et n-1 zones de données d'images différentielles (D1, D2) sont envoyées, à partir d'un flux de données (dat) comportant des signaux de synchronisation (s), à l'aide d'un aiguillage de commutation de réception (w2) et sont envoyés respectivement à un dispositif de mémoire, n étant supérieur/égal à 2,
- n-1 zones de déplacement (M1, M2) sont déterminées à partir des première et seconde zones de données d'images principales (F1, F4), au moyen de n-1 estimateurs de déplacement (m1, m2) sur la base des déplacements déterminées de points d'image, l'instant de référence respectif de ces zones étant identique à l'instant de référence de la zone associée de données d'image différentielle (D1, D2),
- une zone de données d'image fantôme (P1, P2) est calculée, à partir d'une zone associée respective de déplacement (M1, M2) et des première et seconde zones de données d'images principales (F1, F4) à l'aide d'un dispositif (r1, r2) de calcul d'images fantômes, qui exécute une interpolation linéaire,
- une zone associée de données d'image intermédiaire (F2, F3) est calculée à partir de la zone de données d'image fantôme (P1, P2) et de la zone associée de données d'image différentielle (D1, D2) à l'aide d'un dispositif de sommation (S1, S2), et
- le procédé de décodage fournit, en tant que signaux de sortie, les première et secondes zones de données d'images principales (F1, F4) et les n-1 zones intercalaires reconstituées de données d'images intermédiaires (F2, F3).
